Europäisches Patentamt

European Patent Office

Office européen des brevets

(19)

(11) Numéro de publication : **0 161 977**
**B1**

(12) **FASCICULE DE BREVET EUROPÉEN**

(45) Date de publication du fascicule du brevet :
06.07.88

(51) Int. Cl.⁴ : **C 01 G 31/00, H 01 M 4/48**

(21) Numéro de dépôt : **85400793.7**

(22) Date de dépôt : **23.04.85**

(54) **Nouveau procédé de synthèse de l'oxyde de vanadium.**

(30) Priorité : 24.04.84 FR 8406415

(43) Date de publication de la demande :
21.11.85 Bulletin 85/47

(45) Mention de la délivrance du brevet :
06.07.88 Bulletin 88/27

(84) Etats contractants désignés :
AT BE CH DE GB IT LI LU NL SE

(56) Documents cités :
GB-A- 2 033 138
US-A- 3 573 088
"Gmelins Handbuch der anorganischen Chemie",
Vanadium, Partie B, livraison 1, no.48, 1976, page 88,
Verlag Chemie GmbH, Weinheim, DE;

(73) Titulaire : SOCIETE NATIONALE ELF AQUITAINE
Tour Aquitaine
F-92400 Courbevoie (FR)

(72) Inventeur : Hammou, Abdelkader
44, Avenue de la Bruyère
F-38100 Grenoble (FR)
Inventeur : Rigaud, Philippe
Les Charavelles Bât. Azalée
F-38200 Vienne (FR)
Inventeur : Rousseau, Catherine
34 rue des Robetières
F-85000 La Roche Sur Yon (FR)

(74) Mandataire : Boillot, Marc
SOCIETE NATIONALE ELF AQUITAINE Division Propriété Industrielle Tour Elf
F-92078 Paris la Défense Cédex 45 (FR)

EP 0 161 977 B1

## Description

La présente invention concerne un nouveau procédé de synthèse de l'oxyde de Vanadium $V_6O_{13}$ par réduction de $V_2O_5$ en présence d'un mélange de gaz réducteur.

On a déjà proposé différents procédés de synthèse de l'oxyde de Vanadium $V_6O_{13}$. Par exemple, on peut réduire $V_2O_5$ par du Vanadium métallique, à haute température et avec un temps de séjour très long, de l'ordre de deux à trois jours.

On peut aussi prévoir une réduction par $NH_3$ ou l'hydrogène. Ces différents procédés sont longs et compliqués puisque par exemple la synthèse par réduction au Vanadium métallique nécessite un vide statique très poussé. En outre, ils présentent l'inconvénient de fournir du $V_6O_{13}$ se présentant sous une structure d'aiguilles.

Une des applications visées pour l'oxyde de Vanadium élaboré selon la présente invention est la réalisation d'électrodes positives pour un générateur au lithium et dont l'électrolyte est un sel de lithium en solution dans un matériau macromoléculaire.

Un tel générateur est par exemple décrit dans le brevet européen n° 1399. Dans de tels générateurs, on prévoit d'utiliser $V_6O_{13}$ comme matériau d'insertion apte d'insérer des atomes de lithium. De façon à obtenir de bonnes performances pour les réactions d'insertion, les demandeurs ont découvert qu'il était préférable que l'oxyde de Vanadium se présente sous forme de grains, c'est-à-dire avec une morphologie totalement différente de celle obtenue avec les méthodes de réduction par le Vanadium métallique, $NH_3$ ou l'hydrogène.

D'autre part, pour la réalisation de telles électrodes positives, il est préférable d'avoir un produit le plus pur possible, et en particulier un produit qui soit quasiment exempt de $V_2O_5$ ; ce dernier, lorsqu'il est présent en grande quantité dans le matériau d'électrode, perturbe les courbes de décharge et en particulier occasionne une variation brusque de la tension de décharge.

De façon à obtenir un produit se présentant sous forme de grains, les demandeurs ont découvert que l'on pouvait utiliser une synthèse mettant en œuvre la réduction de $V_2O_5$ par un mélange réducteur d'oxyde de carbone et de dioxyde de carbone.

Une synthèse de ce type est suggérée dans la publication I.A. VASIL'EVA, S.N. SAFRONOVA MOSK. Gos. Univ. Im. Lomonosova. Moscow. Sh. Fiz — Khim 1976 — 50 — 2193. Cet article donne les valeurs des constantes thermodynamiques de $V_6O_{13}$. Celles-ci permettent de calculer, à une température donnée, la composition exacte du mélange réducteur $CO/CO_2$ afin de former le composé $V_6O_{13}$. A 600 °C, il faut utiliser un mélange très pauvre en CO de l'ordre de $10^{-2}$ % de CO en % volume, ce qui correspond à une pression partielle en oxygène très faible, de l'ordre de $10^{-4}$ atmosphère. Si, en dépit des difficultés pratiques que cet article laisse entrevoir, on tente l'expérience, on obtient un mélange de plusieurs oxydes de Vanadium, mais pas, ou pratiquement pas, de $V_6O_{13}$, ce qui pourrait s'expliquer par son instabilité à cette pression d'oxygène.

De façon à obtenir un produit qui corresponde aux différentes exigences énoncées ci-dessus, en particulier un produit pratiquement exempt d'impuretés qui se présente avec une structure morphologique du type grain, les demandeurs ont mis au point un nouveau procédé de synthèse de l'oxyde de Vanadium à partir de $V_2O_5$ par réduction de $V_2O_5$ en présence d'un mélange $CO/CO_2$, cette réduction se faisant à haute température, ledit procédé étant caractérisé en ce que l'on utilise un mélange gazeux $CO/CO_2$ comprenant de 5 à 15 % en volume de CO, de préférence 10 %, et que le temps de mise en contact est suffisant pour obtenir une réduction quasi totale de l'oxyde de Vanadium en $V_6O_{13}$.

Selon un mode particulier de réalisation, on fait passer le mélange gazeux sur l'oxyde selon un débit volumique compris entre 15 et 20 litres par heure (l/h) pendant une durée supérieure à 2 heures, de préférence comprise entre 4 et 5 heures.

De préférence, la température de réaction est de l'ordre de 600 °C.

Mais les avantages et les caractéristiques de l'invention apparaîtront plus clairement à la lecture des exemples suivants, donnés uniquement à titre d'illustration et qui ne doivent donc pas être considérés comme limitatifs.

On a utilisé une enceinte réactionnelle constituée par un moule en ciment réfractaire contenant un système électrique de chauffage, régulé. Le moule de ciment est entouré d'un système d'isolation. Le système de régulation est performant jusqu'à 1 250 °C.

On place dans l'enceinte environ 5 g de $V_2O_5$ comportant moins de 0,2 % en masse d'impuretés. On fait passer dans l'enceinte un mélange gazeux $CO/CO_2$ à 10 % en volume de CO, avec un débit de 17 l/heure, l'enceinte réactionnelle étant déjà à une température de 600 °C. Après 4h50 de réaction, la circulation du mélange gazeux est arrêtée, l'enceinte est refroidie. Quand le four est froid, on injecte du $CO_2$ pur pour purger le système.

L'analyse du produit aux rayons X a permis de montrer que l'on avait obtenu $V_6O_{13}$ pratiquement pur, avec seulement quelques traces de $V_2O_5$.

Si on répète l'expérience avec un mélange gazeux plus riche en CO, le produit obtenu est beaucoup moins pur.

Pour les conditions expérimentales ci-dessus, on s'est aperçu que le temps de passage optimal du mélange gazeux sur l'oxyde $V_2O_5$ était de 4h30 plus 20 mn de stabilisation, puisque pour une durée inférieure à 4h, on obtient un mélange comportant une part notable de $V_2O_5$ et éventuellement $V_7O_{13}$ et que l'on retrouve ces résultats pour des durées supérieures à 5h.

Mais l'invention n'est pas limitée à ces exemples, elle en englobe au contraire toutes les variantes.

## Revendications

1. Procédé de synthèse de l'oxyde de Vanadium $V_6O_{13}$ à partir de $V_2O_5$ par réduction de $V_2O_5$ à haute température par un mélange gazeux de dioxyde et de monoxyde de carbone, caractérisé en ce que le mélange comprend entre 5 et 15 % en volume de monoxyde de carbone et que le temps de contact du mélange gazeux et de l'oxyde $V_2O_5$ est suffisant pour obtenir une réduction quasi totale dudit oxyde en $V_6O_{13}$.

2. Procédé de synthèse selon la revendication 1, caractérisé en ce que le mélange gazeux comprend 10 % en volume de monoxyde de carbone.

3. Procédé de synthèse selon la revendication 2, caractérisé en ce que le mélange gazeux est envoyé sur le $V_2O_5$ pendant une durée supérieure à 2 heures, avec un débit compris entre 15 et 20 l/h, pour une masse de $V_2O_5$ voisine de 5 grammes et une température voisine de 600 °C.

4. Procédé selon la revendication 3, caractérisé en ce que le mélange gazeux est envoyé pendant une durée comprise entre 4 et 5 heures avec un débit de l'ordre de 17 l/h.

5. Procédé selon la revendication 4, caractérisé en ce que le mélange gazeux est envoyé sur $V_2O_5$ pendant 4h50mn environ.

## Claims

1. Process of synthesis of vanadium oxide $V_6O_{13}$ from $V_2O_5$ by reduction of $V_2O_5$ at high temperature by a gaseous mixture of carbon dioxide and carbon monoxide, characterised in that the mixture comprises between 5 and 15 % by volume of carbon monoxide and in that the contact time of the gaseous mixture and the $V_2O_5$ oxide is sufficient to obtain an almost complete reduction of the said oxide in $V_6O_{13}$.

2. Synthesis process according to claim 1, characterised in that the gaseous mixture comprises 10 % by volume of carbon monoxide.

3. Synthesis process according to claim 2, characterised in that the gaseous mixture is fed onto the $V_2O_5$ over a period of more than two hours with a feed rate of between 15 and 20 litres an hour, for a mass of $V_2O_5$ of approximately 5 grammes and a temperature in the region of 600 °C.

4. Process according to claim 3, characterised in that the gaseous mixture is fed over a period of between 4 and 5 hours with a feed rate of the order of 17 litres an hour.

5. Process according to claim 4, characterised in that the gaseous mixture is fed on $V_2O_5$ for a period of approximately 4 hours 50 minutes.

## Patentansprüche

1. Verfahren zur Synthese des Vanadiumoxids $V_6O_{13}$, ausgehend von $V_2O_5$ durch Reduktion von $V_2O_5$ bei hoher Temperatur mit einem gasförmigen Gemisch aus Kohlendioxid und Kohlenmonoxid, dadurch gekennzeichnet, daß das Gemisch 5 bis 15 Vol-% Kohlenmonoxid enthält und die Dauer der Kontaktierung des gasförmigen Gemischs mit dem Oxid $V_2O_5$ ausreicht, um eine Reduktion fast des gesamten angeführten Oxids zu $V_6O_{13}$ zu erzielen.

2. Syntheseverfahren nach Anspruch 1, dadurch gekennzeichnet, daß das gasförmige Gemisch 10 Vol-% Kohlenmonoxid enthält.

3. Syntheseverfahren nach Anspruch 2, dadurch gekennzeichnet, daß das gasförmige Gemisch über $V_2O_5$ während einer Zeitdauer von über 2 Stunden bei einem Durchsatz von 15 bis 20 l/h, einer Masse an $V_2O_5$ von ca. 5 g und einer Temperatur von ca. 600 °C geleitet wird.

4. Verfahren nach Anspruch 3, dadurch gekennzeichnet, daß das gasförmige Gemisch während einer Zeitdauer zwischen 4 und 5 Stunden bei einem Durchsatz in der Größenordnung von 17 l/h geleitet wird.

5. Verfahren nach Anspruch 4, dadurch gekennzeichnet, daß das gasförmige Gemisch während ca. 4 Stunden und 50 Minuten über $V_2O_5$ geleitet wird.